# EUROPÄISCHE PATENTANMELDUNG

(11) **EP 1 566 658 A1**
(43) Veröffentlichungstag der Anmeldung: **24.08.2005**
(21) Anmeldenummer: 04003784.8
(22) Anmeldetag: 19.02.2004
(51) Int. Cl.: G01S 17/08, G01C 3/08, G01B 3/10

(54) **Handgehaltene Vorrichtung zum Messen von Distanzen**

(71) Anmelder: Leica Geosystems AG, 9435 Heerbrugg (CH)
(72) Erfinder: Bögel, Gerhard, 9436 Balgach (DE); Baertlein, Hugh, 19032 Lerici (IT)
(74) Vertreter: Kaminski, Susanne

(57) **Zusammenfassung**

Eine erfindungsgemässe Vorrichtung zum handgehaltenen Messen von Distanzen (d) zu einem Oberflächenbereich eines Objekts (22) weist ein Gehäuse (2) und zum optischen Messen von Distanzen (d) eine Optik (3) auf. Über die Optik werden Sendestrahlen und gegen den Oberflächenbereich ausgesendet und daran reflektierte Strahlen (5) wieder eingesammelt. Gemäss der Erfindung weist die Vorrichtung zusätzlich ein mit dem Gehäuse (2) verbundenes Bauteil (6, 7, 8, 9) auf, das zum Messen kurzer Distanzen in Ausbreitungsrichtung der Sendestrahlen über das Gehäuse hinaus erstreckbar ist.

Eine Ausführungsform der Erfindung sieht ein als Abstandshalter (9) dienendes Bauteil vor, das sich in einer fest vorbestimmten Länge (i) über das Gehäuse hinaus erstreckt. Die fest vorbestimmte Länge (i) ist zumindest so gross wie der kritische Abstand (a) vor dem Gehäuse (2) in dem keine optischen Messungen auf Oberflächenbereiche möglich sind.

## Beschreibung

Die Erfindung betrifft eine Vorrichtung zum handgehaltenen Messen von Distanzen zu einem Oberflächenbereich eines Objekts mit einem Gehäuse und einer Optik für modulierte Sendestrahlen und für vom Oberflächenbereich reflektierte Strahlen der Sendestrahlen nach dem Oberbegriff des Anspruchs 1.

Derartige handgehaltene Vorrichtungen zum optischen Messen von Distanzen sind seit Jahren bekannt und werden heute zu hunderttausenden für unterschiedlichste Anwendungen, insbesondere im Bauwesen, eingesetzt. Mit ihnen können Distanzen zwischen einem Messanschlag der Vorrichtung und einem Oberflächenbereich eines Objekts innerhalb eines Distanzmessbereichs von wenigen Dezimetern bis zu beispielsweise 30 Metern mit einer Genauigkeit von wenigen Millimetern optisch gemessen werden. Dabei werden zum Messen von Distanzen von der Vorrichtung über eine Optik modulierte optische Strahlen gegen das zu messende Objekt ausgesendet. Wenigstens ein Teil der Sendestrahlen wird vom Oberflächenbereich des Objekts in Richtung der Vorrichtung zurück reflektiert. Über die Optik werden vom Oberflächenbereich reflektierte Strahlen beabstandet zu den Sendestrahlen wieder eingesammelt und von einem Empfänger der Vorrichtung in ein elektrisches Signal umgewandelt. Aufgrund der Ausbreitungsgeschwindigkeit optischer Strahlen kann durch Auswertung des elektrischen Signals die Distanz zwischen dem Messanschlag und dem Oberflächenbereich des Objekts ermittelt werden.

Aufgrund einer Parallaxe zwischen den Sendestrahlen und den dazu beabstandeten, eingesammelten, reflektierten Strahlen entfernen sich beim Messen auf einen Oberflächenbereich in der Nähe der Optik die eingesammelten, reflektierten Strahlen zunehmend vom Zentrum des Empfängers. Je geringer der Abstand des zu messenden Oberflächenbereichs von der Optik ist, umso weniger reflektierte Sendestrahlen können in der Regel vom Empfänger umgewandelt werden. Unterhalb eines kritischen Abstands des Oberflächenbereichs von der Optik unterschreitet das elektrische Signal einen kritischen Wert, so dass ein Messen von Distanzen unterhalb einer kritischen Distanz beeinträchtigt oder sogar ganz verunmöglicht wird. Aus dem Stand der Technik sind unterschiedliche Massnahmen bekannt, um die kritische Distanz - unterhalb derer optisches Messen von Distanzen nicht mehr möglich ist - möglichst gering zu halten.

Aus der DE 43 16 348 A1 ist beispielsweise eine derartige Vorrichtung zur optischen Entfernungsmessung mit einer biaxialen Optik und einer in deren Brennebene beweglichen Lichtleitfaser bekannt. Über die Lichtleitfaser werden an einem Objekt reflektierte, eingesammelte Strahlen eines von der Vorrichtung ausgesendeten Laserbündels zu einem Empfänger weitergeleitet. Die Lichtleitfaser wird dabei den in Abhängigkeit der Distanz wandernden, reflektierten Strahlen mechanisch nachgeführt. Diese Nachführung beeinträchtigt einerseits die Messgeschwindigkeit und erfordert andererseits eine aufwändige Konstruktion. Dennoch können Distanzmessungen auf Objekte innerhalb eines kritischen Abstands von zwanzig Zentimetern vor der Optik nicht ausgeführt werden.

Aus der WO 03 / 002 939 A1 ist eine handgehaltene Vorrichtung mit biaxialer Optik zur optischen Distanzmessung und mit einem optischen Detektor bekannt, der eine in der Brennebene ausgedehnt ausgebildete, lichtempfindliche Detektionsfläche aufweist. Durch diese in der Brennebene ausdehnte Detektionsfläche kann von den bei kleiner werdenden Abständen weg wandernden, eingesammelten, reflektierten Strahlen ein grösserer Anteil detektiert werden. Trotz der ausgedehnten Detektionsfläche weist jedoch auch diese Vorrichtung einen kritischen Abstandsbereich bis zu etwa zehn Zentimetern vor der Optik auf, in dem optisches Messen von Distanzen nicht möglich ist. In der Praxis werden daher kurze Distanzen nach wie vor mit altbewährten, körperlichen Messmitteln - wie beispielsweise Zollstock oder Rollmeter - gemessen.

Es ist Aufgabe der Erfindung Mängel des Standes der Technik zu beheben und eine handgehaltene Vorrichtung zu Messen von Distanzen zu einem Oberflächenbereich eines Objekts mit einem Gehäuse und einer Optik für modulierte Sendestrahlen und für vom Oberflächenbereich reflektierte Strahlen bereitzustellen, die eine geringere kritische Distanz, unterhalb derer ein Messen von Distanzen nicht mehr möglich ist, aufweist.

Die Aufgabe wird durch eine Vorrichtung mit den Merkmalen des Patentanspruchs 1 gelöst. Weitere alternative oder vorteilhafte Aus- bzw. Weiterbildungen der Erfindung sind in den abhängigen Patentansprüchen beschrieben.

Eine erfindungsgemässe Vorrichtung zum handgehaltenen Messen von Distanzen zu einem Oberflächenbereich eines Objekts weist ein Gehäuse und eine in das Gehäuse eingelassene Optik auf. Zum optischen Messen der Distanz zum Oberflächenbereich werden von der Vorrichtung über die Optik modulierte optische Sendestrahlen in Form eines Strahlenbündels gegen den Oberflächenbereich ausgesendet. Ein Teil der vom Oberflächenbereich reflektierten Strahlen der Sendestrahlen wird von der Optik wieder eingesammelt und für ein Bestimmen von Distanzen elektronisch ausgewertet. Gemäss der Erfindung weist die Vorrichtung zusätzlich ein mit dem Gehäuse verbundenes Bauteil auf, das zum Messen kurzer Distanzen in Ausbreitungsrichtung der Sendestrahlen über das Gehäuse hinaus erstreckbar ist.

Eine Ausführungsform der Erfindung sieht auch ein Messen kurzer Distanzen auf optischem Weg vor. Dabei erstreckt sich ein als Abstandshalter dienendes Bauteil in einer fest vorbestimmten Länge in Ausbreitungsrichtung der Sendestrahlen über das Gehäuse hinaus. Die fest vorbestimmte Länge ist mit Vorteil zumindest so gross wie der kritische Abstand vor dem Gehäuse, in welchem keine optischen Messungen auf Oberflächenbereiche möglich sind. Im erstreckten Zustand wird durch das dem Gehäuse abgewandte Ende des Abstandshalters der Nullpunkt für die gemessenen, kurzen Distanzen verkörpert.

Weiterbildungen sehen eine Einrichtung zum Registrieren des vorbestimmt erstreckten Zustands des Abstandshalters, ausklappbare oder in den vorbestimmt erstreckten Zustand selbsttätig ausfahrbare Abstandshalter vor.

Bei einer alternativen Ausführungsform der Erfindung kann über ein verschieden weit über das Gehäuse hinaus erstreckbares Bauteil in Kombination mit dem Gehäuse die Distanz zu einem Objekt körperlich gemessen werden. Zu diesem Zweck ist das Bauteil derart geführt, dass ein Ende des Bauteils beim körperlichen Messen im Wesentlichen parallel zum Sendestrahlenbündel an das Objekt herangeführt wird. Durch ein Erfassen der Relativposition zwischen dem Bauteil und dem Gehäuse sowie der Berücksichtigung der Erstreckung des Gehäuses zwischen dessen dem Objekt zugewandten Seite und dem Messanschlag in Richtung des Sendestrahlenbündels kann die körperlich gemessene Distanz zwischen dem Messanschlag und dem Objekt bestimmt werden.

Das Erfassen der Relativposition zwischen dem Gehäuse und dem Bauteil und auch das darauf folgende Bestimmen des Distanzwerts können dabei auf unterschiedliche Art und Weise erfolgen.

Eine Weiterbildung der Erfindung sieht ein Erfassen dieser Relativposition durch die Vorrichtung über eine elektronische Einrichtung vor. Dabei kann die Relativposition in an sich bekannter Weise auf einem insbesondere elektromagnetischen oder optischen Wirkprinzip beruhend relativ oder absolut erfasst werden. Somit ist es auch beim körperlichen Messen möglich - unter Berücksichtigung der Erstreckung des Gehäuses - einen in digitaler Form vorliegender Distanzwert zu bestimmen. Die Vorteile eines digital vorliegenden Messwerts - insbesondere für eine anschliessende Verarbeitung, Speicherung oder Übertragung des Messwerts - liegen auf der Hand.

Die Relativposition kann aber auch einfach über eine erste Skala und eine erste Ablesemarke durch den Benutzer erfasst werden. Dabei können die erste Skala und die erste Ablesemarke auf dem Bauteil bzw. dem Gehäuse angeordnet sein. Je nach Ausbildung des Bauteils können hingegen die erste Skala auf dem Gehäuse und die erste Ablesemarke auf dem Bauteil angeordnet sein. Bei geeigneter Gestaltung der ersten Skala kann der körperlich gemessene Distanzwert - vom Messanschlag bis zum Objekt - über die erste Ablesemarke vom Benutzer direkt auf der ersten Skala abgelesen werden.

Eine andere Weiterbildung der Erfindung sieht eine am Gehäuse angeordnete zweite Skala vor, deren Nullpunkt ebenfalls durch den Messanschlag verkörpert wird und mit Vorteil an einer dem Bauteil benachbarten Gehäusekante angeordnet ist. Mittels der zusätzlichen zweiten Skala kann sogar die Distanz eines unmittelbar in der Nähe des Messanschlags positionierten Objekts mit einer solch weitergebildeten Vorrichtung körperlich gemessen werden. Damit wird es in der Praxis vielen Handwerkern ermöglicht die gesuchten Distanzwerte mit einer einzigen derart weitergebildeten Vorrichtung zu bestimmen.

Eine erfindungsgemässe Vorrichtung kann auch - wie bei Rollmetern üblich - durch einen an einem Ende des Bauteils angeordneten Messhaken weitergebildet sein. Ebenso kann dem Messanschlag der Vorrichtung ein Schleppanschlag zugeordnet sein. Auch sind weitere Skalen, eine Rückzugeinrichtung, gegebenenfalls mit Arretiereinrichtung, für das Bauteil als Weiterbildungen denkbar.

Mit Vorteil wird das Bauteil im Wesentlichen vollständig in das Gehäuse einfahrbar sein und im ausgefahren Zustand über eine Kraft mit einem vorbestimmten Betrag haftreibend gehalten werden.

Eine Führung des Bauteils kann zudem derart ausgebildet sein, dass angesammelter Schmutz entfernbar ist.

Gegebenenfalls ist die Vorrichtung derart ausgebildet, dass die Führung für Reinigungszwecke, beispielsweise über eine entfernbare Abdeckung, zugänglich ist. Auch könnte ein Austausch von Längenmesselementen vorgesehen sein.

Nachstehend wird die Erfindung anhand acht in den Figuren schematisch dargestellten Messanordnungen mit fünf Ausführungsbeispielen erfindungsgemässer Vorrichtungen näher erläutert. Die Ausführungsbeispiele enthalten jeweils Merkmale in Kombination. Merkmale aus unterschiedlichen Ausführungsbeispielen lassen sich hier zu weiteren sinnvollen Kombinationen zusammenfassen. Gleiche Teile in unterschiedlichen Ausführungsbeispielen, welche dieselben Funktionen ausüben, sind mit gleichen Bezeichnungen und Bezugszeichen versehen. Es zeigen in schematischer Darstellung:
- Figur 1: eine erste Messordnung zum optischen und körperlichen Messen einer Distanz zu einem Quader mit einem ersten Ausführungsbeispiel einer erfindungsgemässen Vorrichtung im teilweisen Schnitt in Draufsicht,
- Figur 2: die erste Messanordnung aus Figur 1 in Seitenansicht,
- Figur 3: eine zweite Messanordnung zum körperlichen Messen einer sehr kurzen Distanz zum Quader mit dem ersten Ausführungsbeispiel in Seitenansicht,
- Figur 4: eine dritte Messanordnung zum Messen einer Abmessung des Quaders mit dem ersten Ausführungsbeispiel im gewendeten Zustand in Seitenansicht,
- Figur 5: eine vierte Messanordnung zum körperlichen Messen einer kurzen Distanz zum Quader mit einem zweiten Ausführungsbeispiel einer erfindungsgemässen Vorrichtung im teilweisen Schnitt in Draufsicht,
- Figur 6: die zweite Messanordnung aus Figur 3 mit dem zweiten Ausführungsbeispiel in Draufsicht,
- Figur 7: eine fünfte Messanordnung mit dem Quader und einem Winkelstück sowie dem zweiten Ausführungsbeispiel in Draufsicht.
- Figur 8: eine sechste Messanordnung zum Messen der Tiefe einer Bohrung eines geschnitten dargestellten Würfels und einem dritten Ausführungsbeispiel einer erfindungsgemässen Vorrichtung in Seitenansicht,
- Figur 9: eine siebte Messanordnung mit dem Winkelstück und einem vierten Ausführungsbeispiel einer erfindungsgemässen Vorrichtung im teilweisen Schnitt in Draufsicht.
- Figur 10: eine achte Messanordnung mit dem Würfel und einem fünften Ausführungsbeispiel im teilweisen Schnitt in Draufsicht.

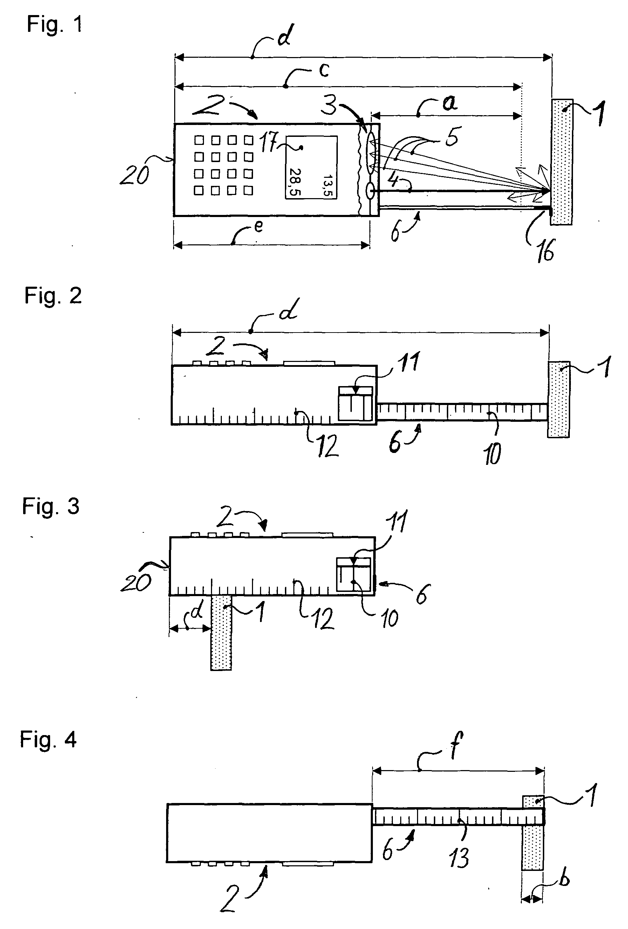

Figur 1 zeigt eine erste Messordnung zum optischen und körperlichen Messen der Distanz d zu einem Oberflächenbereich eines hier als Quader 1 ausgebildeten Objekts mit einem ersten Ausführungsbeispiel einer teilweise geschnitten dargestellten, handgehaltenen Vorrichtung gemäss der Erfindung in Draufsicht.

Die in den Figuren dargestellten Ausführungsbeispiele erfindungsgemässer Vorrichtungen, weisen jeweils ein Gehäuse 2 mit einer Länge von beispielsweise 15 Zentimetern auf. In eine Seite des Gehäuses 2 ist eine nur in den Figuren 1, 9 und 10 im Schnitt dargestellte Optik 3 zum optischen Messen von Distanzen eingelassen. Die Optik 3 weist hier ein Sende- und ein dazu benachbart angeordnetes Empfangssegment auf. Das Sende- und das Empfangssegment sind jeweils Bestandteil eines Sende- bzw. Empfangskanals der Vorrichtung. Die der Seite mit der eingelassenen Optik 3 gegenüberliegende Rückseite 20 des Gehäuses 2 ist hier - wie bei derartigen Messgeräte üblich - als Messanschlag ausgebildet. Dieser verkörpert beim Messen von Distanzen d in der Regel deren Nullpunkt.

Wie aus Figur 1 ersichtlich werden zum optischen Messen von Distanzen d über den Sendekanal modulierte optische Sendestrahlen 4 gegen den Quader 1 ausgesendet. Die Erstreckung e des Gehäuses 2 zwischen der Optik 3 und der Rückseite 20 in Ausbreitungsrichtung der Sendestrahlen 4 entspricht bei den vorliegenden Ausführungsbeispielen nicht ganz der Länge des Gehäuses 2. Je nach Anordnung des Messanschlags am Gehäuse 2 könnte diese Ersteckung aber auch einen anderen Wert annehmen.

Der Quader 1 weist eine natürlich raue Oberfläche auf, von der optische Strahlen streuend reflektiert werden. Ein Teil der gestreut reflektierten Strahlen 5 werden von der Optik 3 eingesammelt, detektiert und in ein elektrisches Signal umgewandelt. Das Signal wird in an sich bekannter Weise zum Bestimmen des digitalen Werts der Distanz d von einer elektronischen Schaltung ausgewertet. Dabei wird die Erstreckung e zwischen der Optik 3 und der hier den Messanschlag bildenden Rückseite 20 berücksichtigt. Der durch die Auswertung digital bestimmte Wert der gemessenen Distanz d - von hier beispielsweise 28.5 Zentimetern - wird dann auf einer Anzeige 17 einem Benutzer von den Ausführungsbeispielen zur Verfügung gestellt.

Aufgrund der optisch geometrischen Gegebenheiten des Sende- und Empfangskanals der Ausführungsbeispiele ist ein Detektieren ausgesendeter, an der Oberfläche des Quader 1 gestreut reflektierter Strahlen 5 erst möglich, wenn die Oberfläche wenigstens einen kritischen Abstand a von hier etwa 10 Zentimetern von der Optik 3 aufweist. Die Ausführungsbeispiele weisen damit eine in Figur 1 dargestellte, kritische Distanz c - zwischen der als Messanschlag dienenden Rückseite 20 und den durch das Sendestrahlenbündel 4 ausgeleuchteten Bereich der Oberfläche des Quaders - von hier etwa 25 Zentimetern auf. Unterhalb der kritischen Distanz c ist ein optisches Messen nicht mehr möglich. Mit Messgeräten, die den Ausführungsbeispielen entsprechen, kann auf gestreut reflektierende Oberflächen oberhalb der kritischen Distanz c bis hin zu Distanzen d von typischerweise 30 Metern optisch gemessen werden.

Die in den Figuren dargestellten Ausführungsbeispiele weisen gemäss der Erfindung zusätzlich ein mit dem Gehäuse 2 verbundenes Bauteil auf.

Beim ersten Ausführungsbeispiel der Figuren 1 bis 4 ist das Bauteil als Messband 6 ausgebildet. Das Messband 6 kann beispielsweise aus einem gewölbten, elastisch knickbarem Stahlband hergestellt sein. Auf der den Sendestrahlen 4 aus Figur 1 abgewandten Seite weist das Messband 6 eine nur in Figur 2 sichtbare erste Skala 10 sowie auf der den Sendestrahlen 4 zugewandten Seite eine nur in Figur 4 sichtbare dritte Skala 13 auf.

Das Messband 6 weist hier eine etwas kürzere Länge als das Gehäuse 2 auf. Das Messband 6 kann somit in einfacher Weise - auch ohne einen eigens dafür notwendigen Umlenk- oder Aufrollmechanismus - vollständig in das Gehäuse 2 eingefahren werden. Diese Länge des Messbands 6 ermöglicht somit nicht nur ein körperliches Messen von Distanzen d innerhalb des kritischen Abstands a zur Optik 3, sondern auch noch ein körperliches Messen in einem an die kritische Distanz anschliessenden Überlappbereich, in dem sowohl ein körperliches als auch ein optisches Messen der Distanz d möglich ist. Dadurch kann der Bedienkomfort gesteigert und in an sich bekannter Weise zusätzlich die Messsicherheit erhöht werden.

Das ausfahrbare Ende des Messbands 6 ist beim ersten Ausführungsbeispiel als Messhaken 16 ausgebildet. Das Ende könnte aber auch unmittelbar von der Stirnseite des Messbands 6 gebildet werden. Der Messhaken 16 ist hier - in an sich bekannter Weise - um dessen Materialstärke verschiebbar mit dem Messband 6 verbunden. Damit können Messungen entsprechend der dritten Messanordnung aus Figur 4 komfortabler durchgeführt werden.

Das Messband 6 wird beim ersten Ausführungsbeispiel von einer in den Figuren 1 bis 3 nicht sichtbaren, mit dem Gehäuse 2 integral ausgebildeten Führung geführt. Über einen beispielsweise einen auf das Bauteil drückenden Filz oder ein vorgespanntes Federelement, wird dadurch eine Reibkraft derart auf das Bauteil ausgeübt, dass einerseits ein Verstellen ohne grossen Kraftaufwand möglich ist und andererseits das Messband 6 im ausgefahrenen Zustand haftreibend gehalten wird.

Wie aus Figur 1 ersichtlich kann die Distanz d zur Oberfläche des Quaders 1 - alternativ zum optischen Messen - auch über das als Messband 6 ausgebildete Bauteil in Kombination mit dem Gehäuse 2 körperlich gemessen werden. Für das körperliche Messen von Distanzen d wird in einem ersten Schritt der Abstand zwischen dem durch das Sendestrahlenbündel 4 ausgeleuchteten Bereich der Oberfläche des Quaders 1 und der Optik 3 entlang der Ausbreitungsrichtung der Sendestrahlen 4 mit Hilfe des Messbandes 6 gemessen. Zu diesem Zweck wird ein Ende des Messbandes 6 über das Gehäuse 2 hinaus im Wesentlichen parallel zu den Sendestrahlen 4 an den Quader 1 herangeführt. Zum Messen von Distanzen d zwischen der als Messanschlag dienenden Rückseite 20 und der Oberfläche des Quaders 1 wird in der ersten Messanordnung das Ende des Messbandes 6 gegen die Oberfläche des Quaders 1 gestossen und dann die Relativposition zwischen dem Messband 6 und dem Gehäuse 2 erfasst. Unter Berücksichtigung der Erstreckung e des Gehäuses 2 in Richtung der Sendestrahlen 4 von der Optik 3 bis hin zur Rückseite 20 kann in einem zweiten Schritt dann die Distanz d zwischen dem Messanschlag und der Oberfläche des Quader 1 bestimmt werden.

Mit Hilfe des als Messband 6 ausgebildeten Bauteils können mit einer erfindungsgemässen Vorrichtung Distanzen d insbesondere in einem Bereich zwischen der Länge des Gehäuses 2 und der für ein optisches Messen kritischen Distanz c auf einfache Art und Weise körperlich gemessen werden.

Das Erfassen der Relativposition zwischen dem Gehäuse 2 und dem Messband 6 für ein Bestimmen der Distanz d kann dabei auf unterschiedliche Art und Weise erfolgen.

Einerseits kann - wie aus Figur 2 ersichtlich - die körperlich gemessene Distanz d über eine beispielsweise auf dem Gehäuse 2 angeordnete erste Ablesemarke 11 auf einer auf dem Messband 6 angeordneten ersten Skala 10 direkt von einem Benutzer abgelesen werden.

Andererseits weist das erste Ausführungsbeispiel zusätzlich - als Weiterbildung der Erfindung - eine elektronische Einrichtung zum Erfassen der Relativposition zwischen hier dem Messband 6 und dem Gehäuse 2 auf. Damit kann - wie auch beim optischen Messen - ein digitaler Wert für die Distanz d bestimmt und auf der Anzeige 17 angezeigt werden. Der digital vorliegende Wert kann zudem mit Vorteil - wie bei optisch gemessenen Distanz heute üblich - vom Gerät gespeichert, weiterverarbeitet oder übertragen werden.

Auch kann der digitale Wert problemlos in ein anderes Bezugssystem - beispielsweise mit der der Rückseite 20 gegenüberliegenden Frontseite des Gehäuses 2 als Nullpunkt - transformiert werden. Der auf der Anzeige 17 etwas kleiner dargestellte Wert - von hier beispielsweise 13.5 Zentimetern - entspricht damit dem Abstand zwischen der Oberfläche des Quaders 1 und der Frontseite des Gehäuses 2.

Figur 2 zeigt die Messanordnung aus Figur 1 in Seitenansicht. In einer zum Messband 6 parallelen Seitenfläche des Gehäuses 2 ist ein vergrösserndes Ablesefenster mit der ersten Ablesemarke 11 eingelassen. Die erste Skala 10 ist derart gestaltet, dass bei der ersten Ablesemarke 11 der Wert für die körperlich gemessene Distanz d - von hier 28,5 Zentimetern - vom Benutzer direkt abgelesen werden kann.

Auch wäre ein alternatives Ausführungsbeispiel ohne Ablesefenster denkbar. Der Wert der gemessenen Distanz d zum Quader 1 könnte beispielsweise auch über die Frontseite als alternative erste Ablesemarke auf einer alternativen ersten Skala direkt abgelesen werden. Die alternative erste Skala wäre dann gegenüber der ersten Skala 10 etwas verschoben auf dem Messband 6 angeordnet.

Figur 3 zeigt eine zweite Messanordnung zum körperlichen Messen einer sehr kurzen Distanz d zum Quader 1 mit dem ersten Ausführungsbeispiel in Seitenansicht.

Auf einer parallel zum Messband 6 ausgerichteten Seitenfläche des Gehäuses 2 ist zum Messen sehr kurzer Distanzen d entlang einer Kante des Gehäuses 2 eine zweite Skala 12 angeordnet. Mit Hilfe der zweiten Skala 12 können sogar Distanzen d, die kleiner als die Länge des Gehäuses 2 sind, gemessen werden. Durch die Rückseite 20 wird ebenfalls der Nullpunkt auf der Skala 12 ablesbarer Distanzen verkörpert. Durch die zweite Skala 12, die erste Ablesemarke 11 und die erste Skala 10 ist es über das Gehäuse 2 bzw. das Messband 6 möglich, im Prinzip jede Distanz d unterhalb der kritischen Distanz c aus Figur 1 mit dem ersten Ausführungsbeispiel körperlich zu messen.

Figur 4 zeigt eine dritte Messanordnung in Seitenansicht, bei der mit dem ersten Ausführungsbeispiel im gewendeten Zustand eine Abmessung b des Quader 1 gemessen wird. Die dritte Skala 13 ist auf der den Sendestrahlen 4 aus Figur 1 zugewandten Seite des Messbandes 6 angeordnet. Im Gegensatz zu der auf der gegenüberliegenden Seite angeordneten ersten Skala 10 aus Figur 2 wird hier der Nullpunkt der dritten Skala 13 durch das ausfahrbare Ende des Messbands 6 verkörpert. Mittels der dritten Skala 13 können bei ausgefahrenem Messband 6 auch kleine Abmessungen eines Objekts oder relativ kleine Abstände zwischen Objekten auf einfache und komfortable Weise gemessen werden.

Über die Frontseite des Gehäuses 2 als Ablesemarke ist es zudem möglich, den Abstand f zwischen dem ausgefahrenen Ende des Messbands 6 und dem Gehäuse 2 direkt auf der dritten Skala 13 abzulesen.

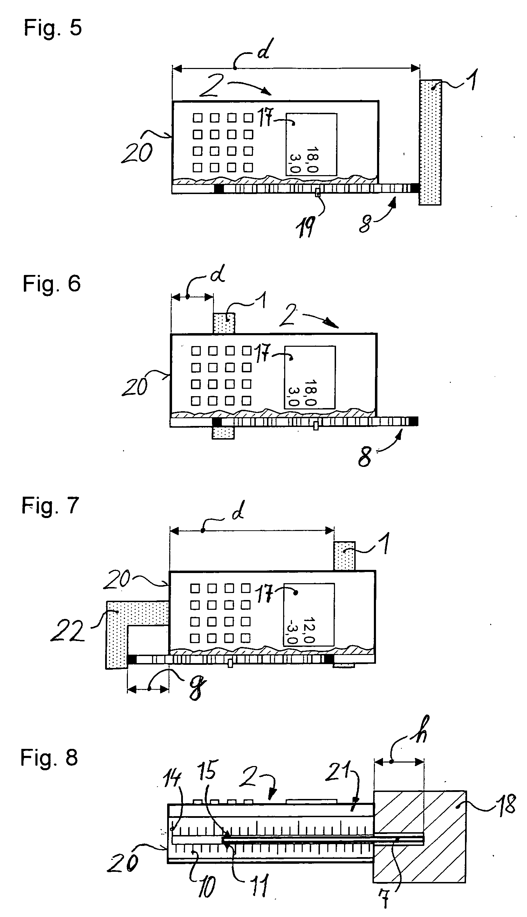

Figur 5 zeigt eine vierte Messanordnung mit dem Quader 1 und einem teilweise geschnitten dargestellten zweiten Ausführungsbeispiel einer erfindungsgemässen Vorrichtung.

Das zweite Ausführungsbeispiel ist in den Figuren 5, 6 und 7 in Draufsicht derart im teilweisen Schnitt dargestellt, dass ein als Messstab 8 ausgebildetes Bauteil sowie dessen mit dem Gehäuse 2 integral ausgebildete Führung sichtbar sind.

Der Messstab 8 ist hier mit einem Betätigungshebel 19 versehen. Im Gegensatz zum ersten Ausführungsbeispiel weist das zweite Ausführungsbeispiel keine Skalen auf, über die ein Benutzer direkt Distanzen, Abstände oder Abmessungen von Objekten ablesen kann. Über einen auf der Oberfläche des Messstab 8 aufgebrachten Strichcode kann hier die Relativposition des Messstabs 8 zum Gehäuse 2 elektrooptisch erfasst, unter Berücksichtigung der Länge des Gehäuses 2 die Distanz d bestimmt und diese auf der Anzeige 17 wiedergegeben werden.

Durch die Ausbildung des Messstabs 8, dessen Führung und der automatischen Einrichtung zum Erfassen dessen Relativposition können mit dem zweiten Ausführungsbeispiel im Prinzip die gleichen Messungen wie mit dem ersten Ausführungsbeispiel auch ohne durch den Benutzer abzulesende Skalen ausgeführt werden. Dazu weist der Messstabs 8 mit Vorteil dieselbe Länge wie das Gehäuse 2 auf.

Der Messstab 8 wird am besten in der Nähe einer Bodenkante des Gehäuses 2 geführt, die - wie in den Figuren 5, 6 und 7 gezeigt - zu den Sendestrahlen 4 aus Figur 1 benachbart ist. Im Gegensatz zum ersten Ausführungsbeispiel ist hier der Messstab 8 beidseitig über das Gehäuse 2 hinaus erstreckbar. Mit Vorteil ist das Gehäuse 2 im Bereich der Führung transparent ausgebildet, so dass beide Enden des Messstabs 8 für Messzwecke einsehbar sind. Auch weist die Führung einen hier nicht sichtbaren Schlitz für den Betätigungshebel 19 auf.

In der vierten Messanordnung von Figur 5 wird mit dem zweiten Ausführungsbeispiel die Distanz d zwischen der Rückseite 20 des Gehäuses 2 und der Oberfläche des Quaders 1 wie bei der ersten Messanordnung körperlichen gemessen. Dafür wird das frontseitige Ende des Messstabs 8 über eine Relativbewegung zum Gehäuse 2 an die Oberfläche des Quaders 1 herangeführt, die Relativposition automatisch erfasst und die dem frontseitigen Ende des Bauteils entsprechende Distanz - von hier 18 Zentimetern - auf der Anzeige 17 wiedergegeben.

Figur 6 zeigt die zweite Messanordnung aus Figur 3 mit dem Quader 1 und dem teilweise geschnittenen dargestellten zweiten Ausführungsbeispiel in Draufsicht. Mit dem zweiten Ausführungsbeispiel kann der Wert der sehr kurzen Distanz d von der Rückseite 20 des Gehäuses 2 bis zur Oberfläche des Quaders 1 - im Gegensatz zum ersten Ausführungsbeispiel - digital bestimmt werden.

Für diesen Zweck wird - wie in Figur 6 gezeigt - das rückseitige Ende des Messstabs 8 über der zu messenden Oberfläche des Quaders 1 positioniert, die Relativposition automatisch erfasst und die dem rückseitigen Ende entsprechende Distanz d - von hier 3 Zentimetern - auf der Anzeige 17 wiedergegeben.

Figur 7 zeigt eine fünfte Messanordnung mit dem Quader 1 und einem Winkelstück 22 sowie dem teilweise geschnittenen zweiten Ausführungsbeispiel in Draufsicht.

Mit dem zweiten Ausführungsbeispiel kann die Distanz d von der Rückseite 20 des Gehäuses 2 zur Oberfläche des Quaders 1 bestimmt werden, indem der Messstab 8 soweit über die Rückseite 20 hinaus bewegt wird, bis das frontseitiges Ende des Messstabs 8 über der zu messenden Oberfläche zu liegen kommt. Nun kann die Messung ausgelöst und sowohl die dem frontseitigen Ende als auch die dem rückseitigen Ende entsprechenden Distanzen - von hier beispielsweise 12 bzw. - 3 Zentimetern - auf der Anzeige 17 wiedergegeben werden.

Wie aus Figur 7 ebenfalls ersichtlich kann zudem über das rückseitige Ende des Messstabs 8, welches sich hier über die Rückseite 20 erstreckt, auch die Abmessung g des Absatzes des Winkelstücks 22 auf digitale Art und Weise bestimmt werden.

Figur 8 zeigt eine sechste Messanordnung beispielsweise zum Messen der Tiefe h einer Bohrung eines im Schnitt dargestellten Würfels 18 mit einem dritten Ausführungsbeispiel einer erfindungsgemässen Vorrichtung in Seitenansicht.

Das dritte Ausführungsbeispiel weist ein Gehäuse 2 mit einer in Figur 8 nicht sichtbaren Aufnahme und einem Längenmessmodul 21, in dem ein als Messdorn 7 ausgebildetes Bauteil geführt ist. Über die Aufnahme ist das Längenmessmodul 21 mit dem Gehäuse 2 abnehmbar verbunden. Der Messdorn 7 ist hier als stabförmiger, im Wesentlichen starrer Körper ausgebildet, der beispielsweise aus Kunststoff hergestellt sein könnte.

Im Gegensatz zum ersten Ausführungsbeispiel ist hier die erste Skala 10 - zum Ablesen der körperlichen gemessenen Distanz d aus Figur 1 - nicht am Messdorn 7, sondern hier am Längenmessmodul 21 angeordnet. Zudem ist am Längenmessmodul 21 auch eine vierte Skala 14 angeordnet, deren Nullpunkt hier durch die der Rückseite 20 gegenüberliegende Frontseite verkörpert wird. Die erste und eine vierte Ablesemarke 11 bzw. 15 sind hier am rückseitigen Ende des Messdorns 7 angeordnet.

Zum Bestimmen der Tiefe g der Bohrung wird die Frontseite des Gehäuses 2 an den Würfel 18 angelegt und der Messdorn 7 an den Grund der Bohrung gestossen. Über die vierte Ablesemarke 15 kann auf der vierten Skala 14 die Tiefe h der Bohrung abgelesen werden.

Die abnehmbare Verbindung des Längenmessmoduls 21 mit der Aufnahme des Gehäuses 2 ist derart ausgebildet sein, dass im verbundenen Zustand die erste und die vierte Skala 10 bzw. 14 eine vorgegebene Position relativ zur Front- bzw. Rückseite 20 aufweisen. Dies kann in an sich bekannter Weise beispielsweise über Positionierelemente erfolgen.

Eine modulartige Ausbildung des Bauteils und dessen Führung hat den Vorteil, dass handgehaltene Vorrichtungen, die zum Messen kurzer Distanzen nachrüstbar sind, ermöglicht werden.

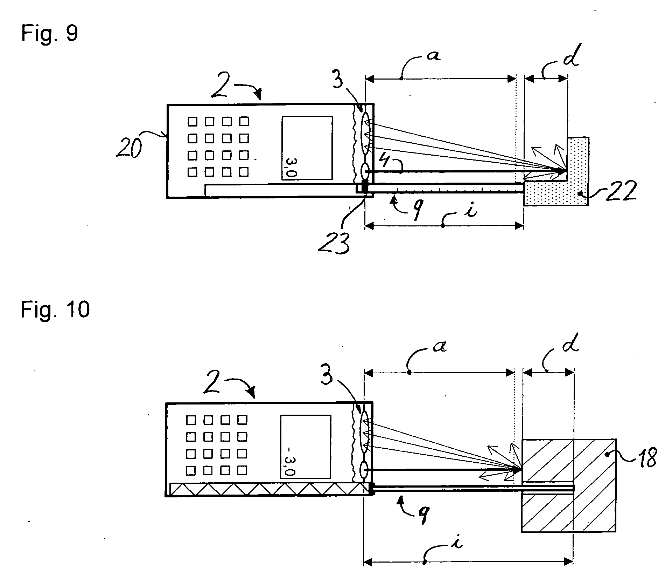

Figur 9 zeigt eine siebte Messanordnung mit dem Winkelstück 22 und einem teilweise geschnitten dargestellten vierten Ausführungsbeispiel einer erfindungsgemässen Vorrichtung in Draufsicht.

Das vierte Ausführungsbeispiel weist ein als Abstandshalter 9 ausgebildetes Bauteil auf. Der Abstandshalter 9 ist hier über einen Bolzen 23 mit dem Gehäuse 2 ausklappbar verbunden.

Beim herkömmlichen optischen Messen von Distanzen zwischen der den Messanschlag bildenden Rückseite 20 des Gehäuses 2 und ausreichend beabstandeten Objekten befindet sich der Abstandshalter 9 im eingeklappten Zustand im Gehäuse 2 versenkt. Hingegen wird beim Messen von kurzen und sehr kurzen Distanzen d der Abstandshalter 9 ausgeklappt und erstreckt sich damit - in Ausbreitungsrichtung der Sendestrahlen 4 - in einer fest vorbestimmten Länge i ausgehend von der Optik 3 über das Gehäuse 2 hinaus.

Bei den ersten drei Ausführungsbeispielen werden kurze und sehr kurze Distanzen d körperlich gemessen, indem das Bauteil über eine Relativbewegung zum Gehäuse 2 mit einem Ende an die zu messende Oberfläche herangeführt wird. Alternativ dazu wird beim vierten Ausführungsbeispiel hingegen der Abstandshalter 9 ausgeklappt. Als Messanschlag dient nun nicht mehr die Rückseite 20 des Gehäuses 2, sondern das ausgeklappte Ende des Abstandshalters 9.

Wird - wie in Figur 9 dargestellt - die fest vorbestimmte Länge i zumindest so gross gewählt wie der kritische Abstand a, so wird dadurch das Einhalten des kritischen Abstands a gewährleistet, wodurch auch sehr kurze Distanzen optisch gemessen werden können. Die Messwerte liegen damit auch ohne eine separate Einrichtung zum Erfassen der Relativposition zwischen dem Bauteil und dem Gehäuse 2 in digitaler Form vor.

Das Ausführungsbeispiel weist mit Vorteil eine in Figur 9 nicht sichtbare Einrichtung zum Registrieren des vorbestimmt erstreckten Zustands des Abstandshalters 9 - z. B. einen einfachen mechanischen Schalter - auf. Registriert die erfindungsgemässe Vorrichtung, dass der Abstandshalter 9 sich ausgeklappt im vorbestimmt erstreckten Zustand befindet, so wird bei der Bestimmung der Distanz d das frontseitige Ende des Abstandshalters 9 als Nullpunkt der angezeigten Distanz d - von hier beispielsweise drei Zentimetern - automatisch berücksichtigt. Beim herkömmlichen optischen Messen mit eingeklapptem Abstandshalter 9 kann hingegen mit Hilfe der Einrichtung zum Registrieren automatisch die Rückseite 20 als Messanschlag und Nullpunkt der gemessenen Distanz berücksichtigt werden. Auf diese Weise können irrtümliche Zuordnungen der beiden unterschiedlichen Messanschläge zu den jeweiligen Arten von Distanzmessungen verhindert werden.

Figur 10 zeigt eine achte Messanordnung mit dem Würfel 18 aus Figur 8 und mit einem teilweise geschnitten dargestellten fünften Ausführungsbeispiel in Draufsicht.

Im Gegensatz zum vierten Ausführungsbeispiel ist der Abstandhalter 9 nicht ausklappbar, sondern ausfahrbar mit dem Gehäuse 2 verbunden. Im ausgefahrenen Zustand wird der hier dornartig ausgebildete Abstandshalter 9 über eine nur schematisch angedeutete Feder gegen einen Anschlag des Gehäuses 2 gedrückt und erstreckt sich so in einer vorbestimmten Länge i über das Gehäuse 2 hinaus. Das fünfte Ausführungsbeispiel ist mit Vorteil ebenfalls mit einer nicht sichtbaren Einrichtung zum Registrieren des bis zum Anschlag ausgefahren Abstandshalters 9 versehen.

Die Länge i des Abstandshalters ist hier grösser als beim vierten Ausführungsbeispiel aus Figur 9, wodurch sich ein grösserer Messbereich ergibt, in dem dieser Messanordnung vergleichbare Messungen durchgeführt werden können.

Auch wäre es denkbar dieses Ausführungsbeispiel neben der Einrichtung zum Registrieren zusätzlich mit einer Einrichtung zum Erfassen der Relativposition zwischen dem ausfahrbaren Abstandshalter 9 und dem Gehäuse 2 zu versehen. Auch könnte die eine oder andere Skala vorzusehen werden. Mit derartig ausgebildeten, handgehaltener Vorrichtungen wäre bei gewissen Anwendungen ein noch flexiblerer Einsatz möglich.

## Patentansprüche

1. Vorrichtung zum handgehaltenen Messen von Distanzen (d) zu einem Oberflächenbereich eines Objekts (1, 18, 22) mit
- einem Gehäuse (2) und
- einer in das Gehäuse (2) eingelassenen Optik (3) für modulierte Sendestrahlen (4) und für am Oberflächenbereich reflektierte Strahlen (5) der Sendestrahlen (4),
**dadurch gekennzeichnet, dass**
- ein mit dem Gehäuse (2) verbundenes Bauteil (6, 7, 8, 9) vorgesehen ist, das zum Messen kurzer Distanzen (d) in Ausbreitungsrichtung der Sendestrahlen (4) über das Gehäuse (2) hinaus erstreckbar ist.

2. Vorrichtung nach Anspruch 1, **dadurch gekennzeichnet, dass**
- sich das Bauteil (9) zum optischen Messen kurzer Distanzen (d) in einer fest vorbestimmten Länge (i) über das Gehäuse (2) hinaus erstreckt, und dass
- im vorbestimmt erstreckten Zustand des Bauteils (9) der Nullpunkt der gemessenen, kurzen Distanzen (d) durch das dem Gehäuse (2) abgewandte Ende des Bauteils (9) verkörpert wird.

3. Vorrichtung nach Anspruch 2, **dadurch gekennzeichnet, dass** eine Einrichtung zum Registrieren des vorbestimmt erstreckten Zustands des Bauteils (9) vorgesehen ist.

4. Vorrichtung nach Anspruch 2 oder 3, **dadurch gekennzeichnet, dass** das Bauteil (9), gegebenenfalls einrastend, in den vorbestimmt erstreckten Zustand ausklapp- oder ausfahrbar ist.

5. Vorrichtung nach Anspruch 1, **dadurch gekennzeichnet, dass**
- zum körperlichen Messen kurzer Distanzen (d), das Bauteil (6, 7, 8) im Wesentlichen parallel zu den Sendestrahlen (4) an den Oberflächenbereich des Objekts (1, 22) heranführbar ist, und dass
- im herangeführten Zustand des Bauteils (6, 7, 8) der Nullpunkt der gemessenen, kurzen Distanzen (d) durch einen Messanschlag (20) des Gehäuses (2) verkörpert wird.

6. Vorrichtung nach Anspruch 5, **dadurch gekennzeichnet, dass** eine erste Ablesemarke (11) zum Ablesen von kurzen Distanzen (d) auf einer ersten Skala (10) vorgesehen ist.

7. Vorrichtung nach einem der Ansprüche 5 bis 6, **dadurch gekennzeichnet, dass** eine zweite Skala (12) am Gehäuse (2) angeordnet ist, deren Nullpunkt durch den Messanschlag (20) verkörpert wird und in deren Endbereich die erste Ablesemarke (11) angeordnet ist.

8. Vorrichtung nach einem der Ansprüche 5 bis 7, **dadurch gekennzeichnet, dass** das Bauteil (6), gegebenenfalls elastisch deformierbar, bandförmig ausgebildet und gegebenenfalls am Bauteil (6) die erste Skala (10) und am Gehäuse (2) die erste Ablesemarke (11) angeordnet ist.

9. Vorrichtung nach einem der Ansprüche 1 bis 7, **dadurch gekennzeichnet, dass** das Bauteil (7, 8, 9) als länglicher, im Wesentlichen, starrer Körper ausgebildet ist.

10. Vorrichtung nach einem der Ansprüche 1 bis 9, **dadurch gekennzeichnet, dass** auf dem Bauteil (6, 7, 9) eine dritte Skala (13) angeordnet ist, deren Nullpunkt durch die dem Gehäuse abgewandte Seite des Bauteils (6, 7, 9) verkörpert wird.

11. Vorrichtung nach einem der Ansprüche 1 bis 10, **dadurch gekennzeichnet, dass** ein Längenmessmodul (21) vorgesehen ist, das über eine Aufnahme am Gehäuse (2) abnehmbar befestigt ist und in dem das Bauteil (6, 7, 8, 9) geführt ist.

12. Vorrichtung nach einem der Ansprüche 1 bis 11, **dadurch gekennzeichnet, dass** die Führung des Bauteils (6, 7, 8, 9) derart ausgebildet ist, dass es in ausgefahrener Stellung haftreibend gehalten wird.

13. Vorrichtung nach einem der Ansprüche 1 bis 12, **dadurch gekennzeichnet, dass** das abgewandte Ende des Bauteils (7, 8) als Messhaken (16) ausgebildet ist, der gegebenenfalls um die Materialstärke des Messhakens (16) verschiebbar ist.

14. Vorrichtung nach einem der Ansprüche 5 bis 10, **dadurch gekennzeichnet, dass** eine elektronische Einrichtung zum Erfassen der Relativposition des Bauteils (6, 7, 8) zum Gehäuse (2) vorgesehen ist.
